(19) Europäisches Patentamt
European Patent Office
Office européen des brevets

(11) **EP 3 701 711 B1**

(12) **EUROPEAN PATENT SPECIFICATION**

(45) Date of publication and mention
of the grant of the patent:
**26.07.2023   Bulletin 2023/30**

(21) Application number: **17929484.8**

(22) Date of filing: **26.10.2017**

(51) International Patent Classification (IPC):
*H04N 23/698* (2023.01)        *B60R 1/00* (2022.01)

(52) Cooperative Patent Classification (CPC):
**H04N 7/181; B60R 1/00; H04N 23/698;**
B60R 2300/105; B60R 2300/302; B60R 2300/50;
B60R 2300/605; B60R 2300/607

(86) International application number:
**PCT/CN2017/107830**

(87) International publication number:
**WO 2019/080051 (02.05.2019 Gazette 2019/18)**

(54) **SURROUND VIEW SYSTEM AND METHOD THEREOF**

RUNDUMSICHTSYSTEM UND ZUGEHÖRIGES VERFAHREN

SYSTÈME DE VISION PÉRIPHÉRIQUE ET PROCÉDÉ ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.09.2020   Bulletin 2020/36**

(73) Proprietor: **Harman International Industries,
Incorporated
Stamford, CT 06901 (US)**

(72) Inventors:
• **CHEN, Liangfu
Shanghai 200233 (CN)**

• **XU, Min
Shanghai 200233 (CN)**

(74) Representative: **Westphal, Mussgnug & Partner,
Patentanwälte mbB
Werinherstraße 79
81541 München (DE)**

(56) References cited:
EP-A1- 2 500 216          WO-A1-2017/026083
WO-A1-2017/061230      CN-A- 102 474 597
CN-A- 105 711 499        JP-A- 2011 004 201
JP-A- 2011 030 078        JP-A- 2012 253 428
US-A1- 2014 347 450      US-A1- 2016 301 863

**Description**

**Field of the Invention**

The present invention relates to a surround view system and a method performed in the surround view system, and specifically relates to a surround view system and a method that can adaptively transform a surround view.

**Background of the Invention**

In recent years, use of driver assistance, especially use of surround view systems has been proliferating. The existing surround view systems usually present the synthetic scene with a predetermined or fixed viewport. However, the driver may expect synthesized surround views with different details when the vehicle is moving in different speeds or turning to different directions. For example, when the vehicle is moving in a relative low speed, the driver may expect synthesized surround views with more details regarding the nearby fields. Or, when the vehicle is turning to a different direction, the driver may expect synthesized surround views with more details on the direction which the vehicle is turning to. Therefore, there is a need for a system and a method for adaptive surround view transformation.

Document WO 2017/061230 A1 discloses a display support device detecting the steering angle of the vehicle using the steering angle sensor, and changing the position of the virtual viewpoint behind the host vehicle based on the detected steering angle. Then, the display support apparatus converts an image captured using a plurality of cameras such as the front camera and the rear camera into an overhead image viewed from a virtual viewpoint, and the vehicle is converted into the converted overhead image. The vehicle icon indicating the position of the vehicle is superimposed and displayed on the display.

Document US 2014/347450 A1 discloses a method comprising the steps of: mapping images captured by a plurality of cameras installed in a vehicle to a virtual plane defined by a 3-dimensional space model having a container shape with a flat bottom surface and a top surface which has an increasing radius; and creating a view image having a viewpoint of a virtual camera by using the image mapped to the virtual plane. An image of vehicle surroundings including surrounding obstacles can be expressed naturally and three-dimensionally. An image of vehicle surroundings can be provided by changing the virtual viewpoint according to a traveling state of the vehicle.

Document JP 2012 253428 A discloses deriving the position of an approaching vehicle approaching a vehicle from behind the vehicle with respect to the vehicle. Then, a composite image viewed from a virtual viewpoint corresponding to the position of the vehicle and the position of the approaching vehicle is generated from captured images captured by plural cameras, and the composite image is displayed on a display.

Document JP 2011 004201 A discloses a surround view system according to the preamble of claim 1, having a circumference display including a virtual camera posture determination part which determines a posture of a virtual camera according to information on a viewpoint position of the virtual camera from a viewpoint position changing means; a driving situation grasping part which grasps a driving situation of a self-vehicle to output driving situation data such as a driving state of the self-vehicle upon receiving the driving situation data from a driving situation data output means; an environmental situation grasping part which grasps an environmental situation around the self-vehicle to output environmental situation data; an obstacle determination part which determines presence/absence of an obstacle on a road surface to output obstacle data; and a watch point position information changing part which changes watch point position information of the virtual camera upon receiving output of the driving situation grasping part, the environmental situation grasping part, and the obstacle determination part, and the watch point position information stored in a storage part.

Document JP 2011 030078 A discloses an image display device for a vehicle including: an imaging unit which includes a plurality of cameras and can photograph the surroundings of the vehicle; a bird's-eye image generating unit for generating a bird's-eye image of the vehicle; a first image generating unit which processes images photographed by the plurality of cameras to produce a background image of the vehicle, and outputs a first image obtained by combining the background image and the bird's eye image; a second image generating unit for forming an image by making the first image plane-symmetrical while defining, as a reference, a plane which is near the background image of a rear part or a front part of the vehicle, vertical to an advancing direction of the vehicle itself and vertical to the ground, and for generating a second image from which the plane-symmetry is identifiable; an image combining unit for selectively combining the first image and the second image; and a display unit capable of displaying an output image from the image combining unit.

Document EP 2 500 216 A1 discloses an imaging driver assistance system having cameras, an image processing unit and a display unit. The image processing unit receives information on the current steering angle of the vehicle, and the picture is displayed on the display unit that dynamically adapts to the steering angle. An image area calculating unit is also used in an imaging driver assistance system.

Document WO 2017/026083 A1 discloses a vehicular display apparatus provided with: an image pickup unit that captures a video around a vehicle; an overhead-view video generation unit that generates an overhead-view video by performing viewpoint conversion on the video captured by the image pickup unit as if the vehicle is being seen from above; a display unit arranged inside the vehicle and in front of the driver's seat and having a horizontally elongated shape; an information acquisition unit that acquires information regarding the steering angle of the vehicle; a direction determination unit that determines, on the basis of the information regarding the steering angle of the vehicle acquired by the information acquisition unit, whether the steering direction of the vehicle is leftward or rightward; and a display control unit that performs control so that the overhead-view video is displayed with the display mode thereof on the display unit changed in accordance with the steering direction of the vehicle as determined by the direction determination unit.

Document CN 102 474 597 A discloses a vehicle peripheral image generation device for generating a vehicle peripheral image. The vehicle peripheral image generation device is provided with an image acquisition unit which acquires vehicle peripheral images photographed by a plurality of photography cameras provided on the vehicle, a display device which is provided in the vehicle interior for displaying the images, a viewing point position setting unit which sets the position of the viewing point of the image displayed on the display device to the viewing point from the vertical upward direction, a fisheye image generation unit which generates a fish-eye image from the view point located at the position set by the viewing point position setting unit using the peripheral images, a self-vehicle image generation unit which generates a self-vehicle image indicating the self-vehicle, and a display image generation unit which generates an image displayed on the display device using the fish-eye image and the self-vehicle image, wherein the viewing point position of the fish-eye image can be changed.

Document US 2016/301863 A1 discloses an image processing system for a machine having a first section pivotally connected to a second section. The image processing system may include a plurality of cameras mounted on the first section and configured to capture image data of an environment around the machine. The image processing system may also include a sensor, a display, and a processing device. The processing device may obtain, from the sensor, information indicative of a rotation of the first section relative to the second section. Based on the information, the processing device may adjust the image data to account for the rotation of the first section relative to the second section. In addition, the processing device may use the adjusted image data to generate a top-view image of the environment around the machine. The processing device may also render the top-view image on the display.

## Summary of the Invention

A surround view system is provided to generate a surround view based on the image data and the vehicle status information. The surround view system includes a surround image sensing module configured to obtain images of a surround view and output image data corresponding to the surround view. For example, the surround image sensing module may include a plurality of cameras provided at different locations on a vehicle. The surround view system further includes a vehicle status retrieval module configured to retrieve vehicle status information, wherein the vehicle status information includes a current driving speed of the vehicle. For example, the vehicle status retrieval module may include a plurality of vehicle status sensors which can sense the status of the vehicle and generate the vehicle status information. Furthermore, the surround view system includes a processing module configured to generate an adaptive surround view based on the image data and the vehicle status information received from the vehicle status retrieval module. The surround view system further includes an outputting module configured to output the adaptive surround view. The processing module comprises a viewport transform composition module configured to receive the vehicle status information from the vehicle status retrieval module, and to generate transformed viewport information. The transformed viewport information comprises a position and a view angle of a virtual camera in a virtual environment, wherein the virtual environment is a bowl-shaped spherical virtual environment, and wherein a virtual vehicle is placed on the center of the bottom of the virtual environment. The virtual camera is transformed within a spherical coordinate system, and the virtual camera is placed on top of the virtual vehicle when the driving speed of the vehicle is zero, and the virtual camera is transformed away from the virtual vehicle in the virtual environment when the vehicle speed increases.

Moreover, a method is provided to generate a surround view based on the image data and the vehicle status information. The method comprises obtaining images of a surround view and outputting image data corresponding to the surround view; retrieving vehicle status information, wherein the vehicle status information includes a current driving speed of the vehicle; generating adaptive surround view based on the image data and the vehicle status information; and outputting the adaptive surround view. The generating the adaptive surround view based on the image data and the vehicle status information comprises generating a transformed viewport information based on the vehicle status information. The transformed viewport information comprises a position and a view angle of a virtual camera in a virtual environment, wherein the virtual environment is a bowl-shaped spherical virtual environment, and wherein a virtual vehicle is placed on the center of the bottom of the virtual environment. The virtual camera is transformed within a spherical coordinate system, and the virtual camera is placed on top of the virtual vehicle when the driving speed of the vehicle is zero, and the virtual camera is transformed away from the virtual vehicle in the virtual environment when the vehicle speed increases.

Other systems, methods, features and advantages will be, or will become, apparent to one with skill in the art upon examination of the following figures and detailed description. It is intended that all such additional systems, methods, features and advantages be included within this description, be within the scope of the invention.

**Brief description of the drawings**

The features, nature, and advantages of the present application may be better understood with reference to the following drawings and description. The components in the figures are not necessarily to scale, emphasis instead being placed upon illustrating the principles of the invention. Moreover, in the figures, like referenced numerals designate corresponding parts throughout the different views.

FIG. 1 illustrates a block diagram of an example surround view system according to the present application.
FIG. 2 illustrates a schematic view of an example spherical coordinate system according to the present application.
FIG. 3 illustrates a schematic view of an example virtual camera transformation during the vehicle speed changes according to the present application.
FIG. 4 illustrates a schematic view of an example virtual camera transformation during the vehicle is turning left according to the present application.
FIG. 5 illustrates a flowchart indicating how a surround view may be generated and adapted.

**Detailed Description**

It is to be understood that the following description of examples of implementations are given only for the purpose of illustration and are not to be taken in a limiting sense. The partitioning of examples in function blocks, modules or units shown in the drawings is not to be construed as indicating that these function blocks, modules or units are necessarily implemented as physically separate units. Functional blocks, modules or units shown or described may be implemented as separate units, circuits, chips, functions, modules, or circuit elements. One or more functional blocks or units may also be implemented in a common circuit, chip, circuit element or unit.

The surround view system includes a surround image sensing module which can obtain images of a surround view and output image data corresponding to the surround view. For example, the surround image sensing module may include a plurality of cameras provided at different locations on a vehicle. The cameras may generate image data of the vehicle's surroundings (such as image data comprising surroundings of a vehicle).

Furthermore, the surround view system includes a vehicle status retrieval module which can retrieve vehicle status information. For example, the vehicle status retrieval module may include a plurality of vehicle status sensors which can sense the status of the vehicle and generate the vehicle status information. The vehicle status information includes vehicle speed and may include at least one of a vehicle gear status, and a steering wheel angle.

Furthermore, the surround view system includes a processing module that generates an adaptive surround view based on the image data and the vehicle status information received from the vehicle status retrieval module. That is, the processing module is capable of synthesizing a virtual environment of the surroundings based on the image data and the vehicle status information received from the vehicle status retrieval module.

Furthermore, the processing module includes a viewport transform composition module which receives the vehicle status information from the vehicle status retrieval module, and generates a transformed viewport information. The transformed viewport information includes a position of a virtual vehicle and a view angle of a virtual vehicle. The viewport transform composition module adapts a position of the virtual camera in a virtual environment based on the status information, and wherein the virtual vehicle is placed in the bottom centre of the virtual environment. The viewport transform composition module transforms the position of the virtual camera far away from the virtual vehicle when the vehicle speed increases, and may transform the view angle of the virtual camera to enlarge coverage of a scene view when the vehicle speed increases.

Furthermore, the processing module may further include an adaptive surround synthesis module, which receives the image data from the surround image sensing module and the transformed viewport information from the viewport transform composition module, and generate an adaptive surround view based on the transformed viewport information. For generating the surround view, the adaptive surround synthesis module may be configured to project the image data in a bowl shaped virtual environment, and generate an adaptive surround view considering the transformed viewport information. Particularly, the adaptive surround synthesis module may use a virtual camera viewport from which the vehicle surround view may be viewed in order to generate a virtual user view. The virtual camera viewport may include a position and/or a view angle from where a virtual camera views a vehicle and surroundings. For example, the virtual camera viewport may comprise a position of the virtual camera and a view angle of the virtual camera.

Furthermore, the surround view system includes an outputting module which outputs the adaptive surround view. For example, the outputting module is a display or a recording device that is capable of recording the surround view.

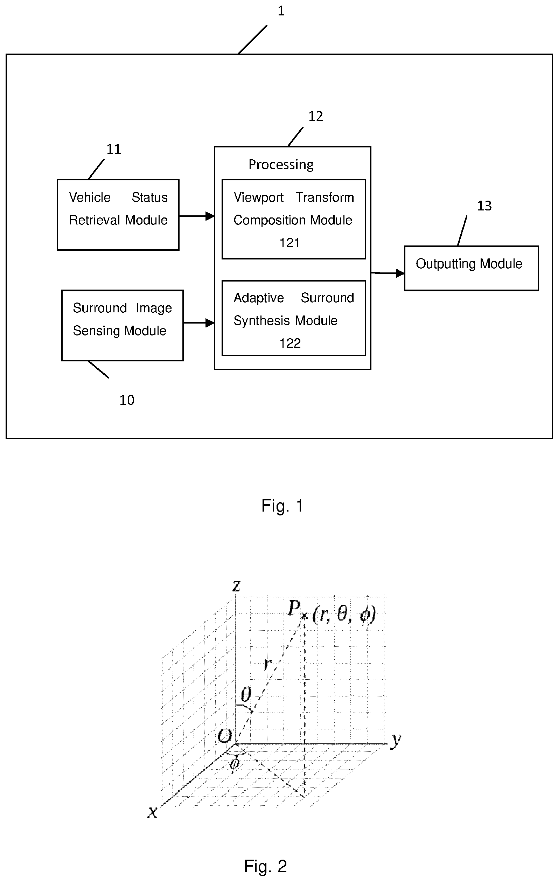

FIG. 1 shows a block diagram of an example surround view system according to the present application.

As shown in Figure 1, the surround view system 1 comprises a surround image sensing module 10, a vehicle status retrieval module 11, a processing module 12 and an outputting module 13. The processing device 12 includes a viewport transform composition module 121 and an adaptive surround synthesis module 122.

The surround image sensing module 10 may include multiple cameras that are provided on different locations of the vehicle. The cameras can obtain images of the surrounding environment and output image data. All cameras may be accurately calibrated during factory manufacture process, thus both intrinsic parameters and extrinsic parameters of the cameras can be obtained. During the image retrieval process, input raw images are undistorted using calibrated intrinsic parameters, and then the undistorted image data are mapped to a bowl-shaped virtual environment.

The vehicle status retrieval module 11 retrieves vehicle status information, such as vehicle speed (current driving speed), vehicle gear status and steering wheel angle. These vehicle status information can be retrieved via either CAN bus or other interfaces. Usually, the signals regarding the vehicle status information are filtered smoothly with low-pass filters in order to avoid noise inputs. The vehicle status retrieval module 11 may comprises a plurality of sensors.

The processing module 12 generates an adaptive surround view based on the image data received from the surround image sensing module 10 and the vehicle status information received from the vehicle status retrieval module 11.

The viewport transform composition module 121 of the processing module 12 receives the vehicle status information from the vehicle status retrieval module 11, and generates transformed viewport information.

The viewport transform composition module 121 considers the following factors which will affect generation of the synthetic surround view scene with optimal view-port. The factors include a vehicle speed which is highly correlated with field of view (FOV), and may include a view angle which will affects the coverage of the scene view, and so on. For example, the scene view may include a front scene view and a side scene view.

The viewport transform composition module 121 performs the view-port transformation by transforming the position of the virtual camera far away from the virtual vehicle in the virtual environment when the vehicle speed increase. In a virtual environment for displaying, the virtual vehicle is placed on the centre of the bottom. For example, the virtual environment may be a bowl-shape virtual environment. Moreover, the viewport transform composition module 121 may transform the view angle to enlarge the coverage of the scene view, for example, transform the front view angle so that more scenes at the front are shown to the driver when the vehicle speed increases. Furthermore, a vehicle turning angle is highly correlated to side view angle, as drivers can see more scenes in the direction they would drive to. The vehicle turning angle may include a steering wheel angle.

Here, a specific example of view-port modeling algorithm is illustrated as follows. Fig. 2 shows a spherical coordinate system with a radial distance r, a polar angle $\theta$, and an azimuthal angle $\phi$. Furthermore, a forward driving speed may be defined as $s$, a turning angle (e.g., a steering wheel angle) may be defined as $\alpha$, whereas an inverse driving speed may be modeled as $s$ with a negative value. In the virtual environment, a virtual vehicle is placed at the center of the bottom, wherein X-axis represents a front-to-back direction, Y-axis represents a left-to-right direction of the vehicle, and Z-axis represents a top-to-bottom direction.

The virtual camera is transformed within a spherical coordinate system, where the virtual vehicle is placed at the origin $O$, and the virtual camera is placed on top of the vehicle, the position (coordinate) of the virtual camera is $P(r, \theta, \phi)$ when the current driving speed of the vehicle is zero.

It's reasonable to define the distance from the center of the virtual vehicle to the virtual camera r and the polar angle $\theta$ are positively correlated with the driving speed $s$. Similarly, the turning angle $\alpha$ is positively correlated to the azimuthal angle $\phi$ in the spherical coordinate system. The correlations among them are shown as follow.

$$r \approx s$$

$$\theta \approx s$$

$$\phi \approx \alpha$$

To get a reasonable surround view output, the pose of the virtual camera may be limited, which may be for example as follows:

$$-60° < \theta < 60°$$

$$-90° < \phi < 90°$$

wherein $\theta$ is a positive value when the vehicle is moving forward, and is a negative value when the vehicle is moving backward. In this way, a dynamic view range transformation (e.g., forward and backward) can be obtained according to driving speed. Similarly, $\phi$ may be defined to be positive when the vehicle is turning to the left direction, and may be defined to be negative when the vehicle is turning to the right direction.

The mapping from a driving speed range $s_b \sim s_f$ and a turning angle range $\alpha_l - \alpha_f$ to a view angle range could be done for example by the following linear mapping:

$$r = \frac{r_0}{s_f - s_b} s$$

$$\theta = \frac{\theta_{max} - \theta_{min}}{s_f - s_b} s$$

$$\phi = \frac{\phi_{max} - \phi_{min}}{\alpha_r - \alpha_l} \alpha$$

wherein $r_0$ is the distance from a virtual camera to a virtual vehicle when the driving speed of the vehicle is zero; $s_f$ and $s_b$ represent respectively a forward max speed and a backward max speed; $\alpha_f$ and $\alpha_b$ represent respectively a left max turning angle and a right side max turning angle.

For example, the abovesaid mapping can be further defined by the weight parameters $w_r$, $w_\theta$, $w_\phi$, along with bias parameters $b_r$, $b_\theta$, $b_\phi$.

Then, the abovesaid mapping could be defined as follows:

$$r = w_r \frac{r_0}{s_f - s_b} s + b_r$$

$$\theta = w_\theta \frac{\theta_{max} - \theta_{min}}{s_f - s_b} s + b_\theta$$

$$\phi = w_\phi \frac{\phi_{max} - \phi_{min}}{\alpha_r - \alpha_l} \alpha + b_\phi$$

The parameters $w_r$, $w_\theta$, $w_\phi$, $b_r$, $b_\theta$, $b_\phi$, can be fine-tuned, for example, during manufacturing process, which enables the smooth view-port transform with arbitrary speed and turning angle as inputs.

Then, Cartesian coordinates can be obtained by applying the following transform:

$$x = r \sin(\theta) \cos(\phi)$$

$$y = r \sin(\theta) \sin(\phi)$$

$$z = r \cos(\theta)$$

The results, i.e., the transformed position and the view angle of the virtual camera are then passed to the adaptive surround synthesis module 122 for synthetic scene generation.

The adaptive surround synthesis module 122 receives the image data from the surround image sensing module 10 and the transformed viewport information from the viewport transform composition module 121, and generate an adaptive surround view based on the transformed viewport information. The transformed viewport may include a position and a view angle of the virtual camera. For generating the surround view, the adaptive surround synthesis module 122 may be configured to project the image data in a bowl shaped virtual environment, and generate adaptive surround view considering the transformed viewport information. The adaptive surround synthesis module 122 may use a virtual camera position from which the vehicle surround view may be viewed in order to generate a virtual user view. The virtual camera position may be a location and/or direction from where a virtual camera views a vehicle and surroundings and the virtual user view may be a virtual view from the virtual camera position. For example, with generated bowl-shaped virtual environment and the abovesaid viewport transform information, a virtual scene can be synthesized with typical graphics modelling interfaces, such as OpenGL and DirectX.

The outputting module 13 outputs the adaptive surround view. For example, the outputting module may include a display or a recorder. For example, this outputting module 13 may display the by-passed synthesized bird-eye view, or encode the generated imaging result into files and save them into a storage device.

The surround view system 1 may be operable to automatically change the position and the view angle of the virtual camera when the vehicle changes the driving speed or the turning angle. Thus, the surround view system 1 can generate smooth viewport transform of surround view, which provides better user experience comparing to the existing system that uses a fixed viewport.

For example, the surround view system 1 may enable users seeing relatively more details or more scenes on the direction where they would drive to, by transforming the virtual camera in a bowl shaped environment considering the vehicle speed and turning angle.

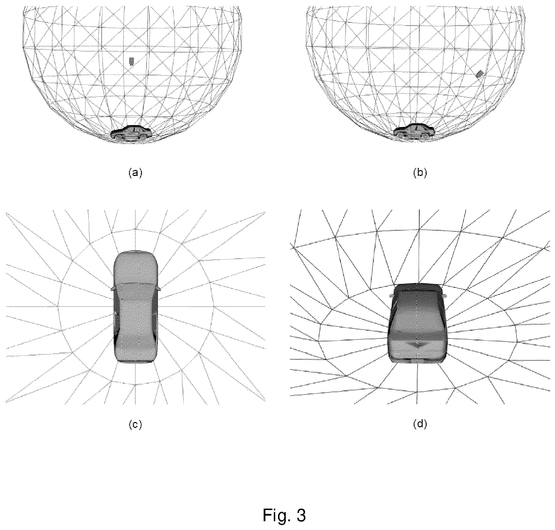

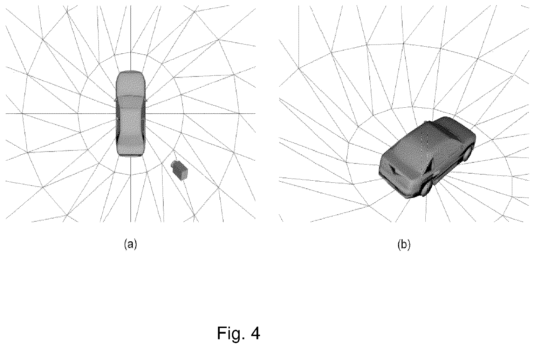

FIG. 3 and FIG. 4 respectively illustrates a schematic view of an example virtual camera transformation during the vehicle speed changes, and a schematic view of an example virtual camera transformation during the vehicle is left turning according to the present application.

For example, as shown in Fig 3, when the driving speed increases from 5 mph to 30 mph, the virtual camera interpolates its position and view angle from (a) to (b). Then, the driver would get the synthetic surround view interpolated from (c) to (d), respectively.

For example, Fig.4 shows how the vehicle turning angle affects the virtual cameras to translate between two sides of a vehicle. As shown in Fig.4, the virtual camera (a) is translated and rotated to the right of the vehicle in case that the steering wheel is turned to the left and the vehicle is moving forward.

By the surround view system 1, a synthetic scene can be generated considering both the vehicle turning angle and the vehicle speed, and thus the viewport transformation can be optimized to enlarge the area where drivers expects to see clearly. The surround view system 1 may also be a dynamic digital video recording system that obtains road scenes to show the truth as evidence.

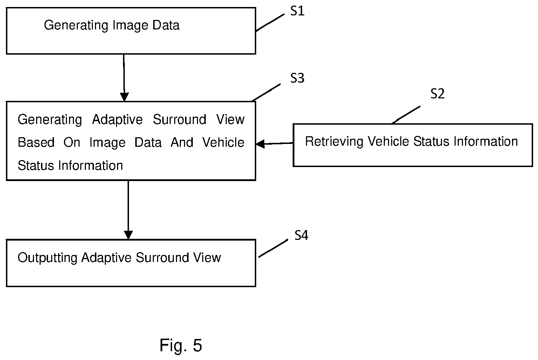

FIG. 5 illustrates a flowchart indicating how an adaptive surround view may be generated and adapted. At S1, images of a surround view and outputs image data can be obtained by the surround image sensing module (such as cameras) 10. The image data covers the vehicle and the surrounding of the vehicle.

At S2, vehicle status information is retrieved by the vehicle status retrieval module (such as image sensors) 11.

At S3, the processing module 12 generates an adaptive surround view based on the image data and the vehicle status information. For example, the viewport transform composition module 121 receives the vehicle status information from the vehicle status retrieval module and determines whether the vehicle status changes. If it changes, then the viewport transform composition module 121 generates a transformed viewport based on the vehicle status information. The transformed viewport information comprises a position and a view angle of a virtual camera in a virtual environment. The vehicle status information includes vehicle speed and may include at least one of a vehicle gear status and a vehicle turning angle information, and so on. The viewport transform composition module 121 adapts the position of the virtual camera in the virtual environment based on the vehicle status information, and wherein the virtual vehicle is placed in the bottom centre of the virtual environment. When the vehicle speed increases, the virtual camera is transformed far away from the virtual vehicle, and the view angle of the virtual camera may be transformed to enlarge coverage of the scene view when the vehicle speed increases. Then, the adaptive surround synthesis module 13 generates adaptive surround view based on the image data and the transformed position and the transformed view angle of the virtual camera.

At S4, an adaptive surround view is output by the outputting module 14. For example, the adaptive surround view can be displayed on a display or be recorded in the medium or other storage devices.

Using the described adaptive surround view system and method, a view port that is interested by the drivers can be adaptive transformed. For example, the drivers can be shown with more details nearby when the vehicle is driving in low speed, or with more details in the direction to which the vehicle is turning.

For example, when a vehicle is moving in a higher speed, larger range of surround view is provided, since relative details around the vehicle is less important when moving in a high speed. Similarly, when a vehicle is turning to one direction, more details on that direction are expected to be shown, as the drivers would expect whether there are any obstacles in that direction. Combining the driving speed and the vehicle turning angle together, a parametric view-port transformation of the virtual camera can be derived so as to display an optimal bird-eye view of the surroundings.

The term "module" may be defined to include a plurality of executable modules. The modules may include software, hardware, firmware, or some combination thereof executable by a processor. Software modules may include instructions stored in memory, or another memory device, that may be executable by the processor or other processor. Hardware modules may include various devices, components, circuits, gates, circuit boards, and the like that are executable, directed, or controlled for performance by the processor.

A computer readable medium or machine readable medium may include any non-transitory memory device that includes or stores software for use by or in connection with an instruction executable system, apparatus, or device. The machine readable medium may be an electronic, magnetic, optical, electromagnetic, infrared, or semiconductor system, apparatus, or device. Examples may include a portable magnetic or optical disk, a volatile memory such as Random Access Memory "RAM", a read-only memory "ROM", or an Erasable Programmable Read-Only Memory "EPROM" or Flash memory. A machine readable memory may also include a non-transitory tangible medium upon which software is stored. The software may be electronically stored as an image or in another format (such as through an optical scan), then compiled, or interpreted or otherwise processed.

The term "computer-readable medium" may include a single medium or multiple media, such as a centralized or distributed database, and/or associated caches and servers that store one or more sets of instructions. The term "computer-readable medium" may also include any medium that is capable of storing, encoding or carrying a set of instructions for execution by a processor or that cause a computer system to perform anyone or more of the methods or operations disclosed. The "computer-readable medium" may be non-transitory, and may be tangible.

The computer-readable medium may include a solid-state memory such as a memory card or other package that houses one or more non-volatile read-only memories. The computer-readable medium may be a random access memory or other volatile re-writable memory. The computer readable medium may include a magneto-optical or optical medium, such as a disk or tapes or other storage device to obtain carrier wave signals such as a signal communicated over a transmission medium. A digital file attachment to an e-mail or other self-contained information archive or set of archives may be considered a distribution medium that is a tangible storage medium.

In alternative examples, dedicated hardware implementations, such as application specific integrated circuits, programmable logic arrays and other hardware devices, may be constructed to implement various parts of the system. Applications that may include the apparatus and systems can broadly include a variety of electronic and computer systems. One or more examples described may implement functions using two or more specific interconnected hardware modules or devices with related control and data signals that can be communicated between and through the modules, or as portions of an application-specific integrated circuit.

The system described may be implemented by software programs executable by a computer system. Implementations can include distributed processing, component/object distributed processing, and parallel processing. Alternatively, virtual computer system processing can be constructed to implement various parts of the system.

The system is not limited to operation with any particular standards and protocols. For example, standards for Internet and other packet switched network transmission (e.g., TCP/IP, UDP/IP, HTML, HTTP) may be used. Replacement standards and protocols having the same or similar functions as those disclosed may also or alternatively be used.

## Claims

1. A surround view system (1), comprising:

   a surround image sensing module (10) configured to obtain images of a surround view and output image data corresponding to the surround image;
   a vehicle status retrieval module (11) configured to retrieve vehicle status information, wherein the vehicle status information includes a current driving speed of the vehicle;
   a processing module (12) configured to generate an adaptive surround view based on the image data and the vehicle status information; and
   an outputting module (13) configured to output the adaptive surround view, wherein

   the processing module (12) comprises a viewport transform composition module (121) configured to receive the vehicle status information from the vehicle status retrieval module (11), and to generate transformed viewport information,
   the transformed viewport information comprises a position and a view angle of a virtual camera in a virtual environment, wherein the virtual environment is a bowl-shaped spherical virtual environment, and wherein a virtual vehicle is placed on the center of the bottom of the virtual environment,
   the virtual camera is transformed within a spherical coordinate system, and
   the virtual camera is placed on top of the virtual vehicle when the driving speed of the vehicle is zero, and the virtual camera is transformed away from the virtual vehicle in the virtual environment when the vehicle speed increases.

2. The surround view system (1) according to claim 1, wherein the processing module (12) further comprises:

   an adaptive surround synthesis module (122) configured to receive the image data from the surround image sensing module (10) and the transformed viewport information from the viewport transform composition module (121), and generate the adaptive surround view based on the image data and the transformed viewport information.

3. The surround view system (1) according to any one of the preceding claims, wherein the vehicle status information further includes at least one of a vehicle gear status, and a vehicle turning angle.

4. The surround view system (1) according to any one of the preceding claims, wherein the outputting module (13) is a display or a recording device that is capable of storing the surround view.

5. The surround view system (1) according to claim 1, wherein the surround image sensing module (10) includes a plurality of cameras positioned at different locations of the vehicle.

6. The surround view system (1) according to claim 1, wherein the vehicle status retrieval module (11) may include a plurality of vehicle status sensors.

7. A method of a surround view system (1), comprising:

   obtaining images of a surrounding view and outputting image data corresponding to the surround image;
   retrieving vehicle status information, wherein the vehicle status information includes a current driving speed of the vehicle;
   generating an adaptive surround view based on the image data and the vehicle status information; and
   outputting the adaptive surround view, wherein

   the generating the adaptive surround view based on the image data and the vehicle status information comprises generating a transformed viewport information based on the vehicle status information,
the transformed viewport information comprises a position and a view angle of a virtual camera in a virtual environment, wherein the virtual environment is a bowl-shaped spherical virtual environment, and wherein a virtual vehicle is placed on the center of the bottom of the virtual environment, and the virtual camera is transformed within a spherical coordinate system, and the virtual camera is placed on top of the virtual vehicle when the driving speed of the vehicle is zero, and the virtual camera is transformed away from the virtual vehicle in the virtual environment when the vehicle speed increases.

8. The method according to claim 7, wherein the generating the adaptive surround view based on the image data and the vehicle status information further comprises:
   generating the adaptive surround view based on the image data and the transformed viewport information.

9. The method according to according to any one of claims 7 to 8, wherein the vehicle status information further includes at least one of a vehicle gear status and a vehicle turning angle information.

10. The method according to any one of claims 7 to 9, wherein the outputting the adaptive surround view comprising displaying or recording the adaptive surround view.

11. A computer product, comprising one or more computer readable media having computer-executable instructions performing the method according to one of claims 7-10.

**Patentansprüche**

1. Rundumsichtsystem (1), umfassend:

   ein Rundumbild-Erfassungsmodul (10), das dazu konfiguriert ist, Bilder einer Rundumsicht zu erlangen und Bilddaten auszugeben, die dem Rundumbild entsprechen;
   ein Fahrzeugstatus-Abrufmodul (11), das dazu konfiguriert ist, Fahrzeugstatusinformationen abzurufen, wobei die Fahrzeugstatusinformationen eine aktuelle Fahrgeschwindigkeit des Fahrzeugs beinhalten;
   ein Verarbeitungsmodul (12), das dazu konfiguriert ist, eine adaptive Rundumsicht basierend auf den Bilddaten und den Fahrzeugstatusinformationen zu generieren; und

   ein Ausgabemodul (13), das dazu konfiguriert ist, die adaptive Rundumsicht auszugeben, wobei

   das Verarbeitungsmodul (12) ein Ansichtsfenstertransformations-Zusammensetzungsmodul (121) umfasst, das dazu konfiguriert ist, die Fahrzeugstatusinformationen von dem Fahrzeugstatus-Abrufmodul (11) zu empfangen und transformierte Ansichtsfensterinformationen zu generieren,
   die transformierten Ansichtsfensterinformationen eine Position und einen Blickwinkel einer virtuellen Kamera in einer virtuellen Umgebung umfassen, wobei die virtuelle Umgebung eine schüsselförmige sphärische virtuelle Umgebung ist und wobei ein virtuelles Fahrzeug in der Mitte des Bodens der virtuellen Umgebung platziert ist,
   die virtuelle Kamera innerhalb eines sphärischen Koordinatensystems transformiert ist und die virtuelle Kamera auf dem virtuellen Fahrzeug platziert ist, wenn die Fahrgeschwindigkeit des Fahrzeugs Null ist, und die virtuelle Kamera von dem virtuellen Fahrzeug in der virtuellen Umgebung weg transformiert ist, wenn die Fahrzeuggeschwindigkeit zunimmt.

2. Rundumsichtsystem (1) nach Anspruch 1, wobei das Verarbeitungsmodul (12) ferner Folgendes umfasst:
   ein adaptives Rundum-Synthesemodul (122), das dazu konfiguriert ist, die Bilddaten von dem Rundumbild-Erfassungsmodul (10) und die transformierten Ansichtsfensterinformationen von dem Ansichtsfenstertransformations-Zusammensetzungsmodul (121) zu empfangen und die adaptive Rundumsicht basierend auf den Bilddaten und den transformierten Ansichtsfensterinformationen zu generieren.

3. Rundumsichtsystem (1) nach einem der vorhergehenden Ansprüche, wobei die Fahrzeugstatusinformationen ferner mindestens eines von einem Fahrzeuggangstatus und einem Fahrzeugeinschlagwinkel beinhalten.

4. Rundumsichtsystem (1) nach einem der vorhergehenden Ansprüche, wobei das Ausgabemodul (13) eine Anzeige oder eine Aufzeichnungsvorrichtung ist, die in der Lage ist, die Rundumsicht zu speichern.

5. Rundumsichtsystem (1) nach Anspruch 1, wobei das Rundumbild-Erfassungsmodul (10) eine Vielzahl von Kameras beinhaltet, die an unterschiedlichen Stellen des Fahrzeugs positioniert ist.

6. Rundumsichtsystem (1) nach Anspruch 1, wobei das Fahrzeugstatus-Abfragemodul (11) eine Vielzahl von Fahrzeugstatussensoren beinhalten kann.

**7.** Verfahren eines Rundumsichtsystems (1), umfassend:

Erlangen von Bildern einer Rundumsicht und Ausgeben von Bilddaten, die dem Rundumbild entsprechen;

Abrufen von Fahrzeugstatusinformationen, wobei die Fahrzeugstatusinformationen eine aktuelle Fahrgeschwindigkeit des Fahrzeugs beinhalten;

Generieren einer adaptiven Rundumsicht basierend auf den Bilddaten und den Fahrzeugstatusinformationen; und

Ausgeben der adaptiven Rundumsicht, wobei das Generieren der adaptiven Rundumsicht basierend auf den Bilddaten und den Fahrzeugstatusinformationen Generieren von transformierten Ansichtsfensterinformationen basierend auf den Fahrzeugstatusinformationen umfasst,

die transformierten Ansichtsfensterinformationen eine Position und einen Blickwinkel einer virtuellen Kamera in einer virtuellen Umgebung umfassen, wobei die virtuelle Umgebung eine schüsselförmige sphärische virtuelle Umgebung ist und wobei ein virtuelles Fahrzeug in der Mitte des Bodens der virtuellen Umgebung platziert ist, und

die virtuelle Kamera innerhalb eines sphärischen Koordinatensystems transformiert ist und die virtuelle Kamera auf dem virtuellen Fahrzeug platziert ist, wenn die Fahrgeschwindigkeit des Fahrzeugs Null ist, und die virtuelle Kamera von dem virtuellen Fahrzeug in der virtuellen Umgebung weg transformiert ist, wenn die Fahrzeuggeschwindigkeit zunimmt.

**8.** Verfahren nach Anspruch 7, wobei das Generieren der adaptiven Rundumsicht basierend auf den Bilddaten und den Fahrzeugstatusinformationen ferner Folgendes umfasst:

Generieren der adaptiven Rundumsicht basierend auf den Bilddaten und den transformierten Ansichtsfensterinformationen.

**9.** Verfahren nach einem der Ansprüche 7 bis 8, wobei die Fahrzeugstatusinformationen ferner mindestens eines von einem Fahrzeuggangstatus und einer Fahrzeugeinschlagwinkelinformation beinhalten.

**10.** Verfahren nach einem der Ansprüche 7 bis 9, wobei das Ausgeben der adaptiven Rundumsicht Anzeigen oder Aufzeichnen der adaptiven Rundumsicht umfasst.

**11.** Computerprodukt, umfassend ein computerlesbares Medium oder mehrere computerlesbare Medien mit computerausführbaren Anweisungen, die das Verfahren nach einem der Ansprüche 7-10 durchführen.

**Revendications**

**1.** Système de vision périphérique (1), comprenant :

un module de détection d'image périphérique (10) configuré pour obtenir des images d'une vision périphérique et produire des données d'image correspondant à l'image périphérique ;

un module de récupération d'état de véhicule (11) configuré pour récupérer des informations d'état de véhicule, dans lequel les informations d'état de véhicule incluent une vitesse de conduite actuelle du véhicule ;

un module de traitement (12) configuré pour générer une vision périphérique adaptative basée sur les données d'image et les informations d'état de véhicule ; et

un module de sortie (13) configuré pour produire la vision périphérique adaptative, dans lequel le module de traitement (12) comprend un module de composition de transformation de fenêtre d'affichage (121) configuré pour recevoir les informations d'état de véhicule provenant du module de récupération d'état de véhicule (11), et pour générer des informations de fenêtre d'affichage transformées,

les informations de fenêtre d'affichage transformées comprennent une position et un angle de vue d'une caméra virtuelle dans un environnement virtuel, l'environnement virtuel étant un environnement virtuel sphérique en forme de bol, et un véhicule virtuel étant placé au centre du fond de l'environnement virtuel, la caméra virtuelle est transformée à l'intérieur d'un système de coordonnées sphériques, et

la caméra virtuelle est placée au-dessus du véhicule virtuel lorsque la vitesse de conduite du véhicule est nulle, et la caméra virtuelle est transformée à distance du véhicule virtuel dans l'environnement virtuel lorsque la vitesse du véhicule augmente.

**2.** Système de vision périphérique (1) selon la revendication 1, dans lequel le module de traitement (12) comprend en outre :

un module de synthèse périphérique adaptatif (122) configuré pour recevoir les données d'image provenant du module de détection d'image périphérique (10) et les informations de fenêtre d'affichage transformées provenant du module de composition de transformation de fenêtre d'affichage (121), et générer la vision périphérique adaptative sur la base des données d'image et des informations de fenêtre d'affichage transformées.

3. Système de vision périphérique (1) selon l'une quelconque des revendications précédentes, dans lequel les informations d'état de véhicule incluent en outre au moins l'un d'un état de vitesse de véhicule et d'un angle de braquage de véhicule.

4. Système de vision périphérique (1) selon l'une quelconque des revendications précédentes, dans lequel le module de sortie (13) est un dispositif d'affichage ou d'enregistrement qui est capable de stocker la vision périphérique.

5. Système de vision périphérique (1) selon la revendication 1, dans lequel le module de détection d'image périphérique (10) inclut une pluralité de caméras positionnées à différents emplacements du véhicule.

6. Système de vision périphérique (1) selon la revendication 1, dans lequel le module de récupération d'état de véhicule (11) peut inclure une pluralité de détecteurs d'état de véhicule.

7. Procédé d'un système de vision périphérique (1), comprenant :

l'obtention d'images d'une vision périphérique et la production de données d'image correspondant à l'image périphérique ;
la récupération d'informations d'état de véhicule, les informations d'état de véhicule incluent une vitesse de conduite actuelle du véhicule ;
la génération d'une vision périphérique adaptative sur la base des données d'image et des informations d'état de véhicule ; et
la production de la vision périphérique adaptative, dans lequel la génération de la vision périphérique adaptative sur la base des données d'image et des informations d'état de véhicule comprend la génération d'informations de fenêtre d'affichage transformées sur la base des informations d'état de véhicule,
les informations de fenêtre d'affichage transformées comprennent une position et un angle de vue d'une caméra virtuelle dans un environnement virtuel, l'environnement virtuel étant un environnement virtuel sphérique en forme de bol, et un véhicule virtuel étant placé au centre du fond de l'environnement virtuel, et
la caméra virtuelle est transformée à l'intérieur d'un système de coordonnées sphériques, et la caméra virtuelle est placée au-dessus du véhicule virtuel lorsque la vitesse de conduite du véhicule est nulle, et la caméra virtuelle est transformée à distance du véhicule virtuel dans l'environnement virtuel lorsque la vitesse du véhicule augmente.

8. Procédé selon la revendication 7, dans lequel la génération de la vision périphérique adaptative sur la base des données d'image et des informations d'état du véhicule comprend en outre :
la génération de la vision périphérique adaptative sur la base des données d'image et des informations de fenêtre d'affichage transformées.

9. Procédé selon l'une quelconque des revendications 7 à 8, dans lequel les informations d'état de véhicule incluent en outre au moins l'un d'un état de vitesse de véhicule et d'une information d'angle de braquage de véhicule.

10. Procédé selon l'une quelconque des revendications 7 à 9, dans lequel la production de la vision périphérique adaptative comprend l'affichage ou l'enregistrement de la vision périphérique.

11. Produit informatique, comprenant un ou plusieurs supports lisibles par ordinateur ayant des instructions exécutables par ordinateur exécutant le procédé selon l'une des revendications 7 à 10.

1

Fig. 1

Fig. 2

(a)

(b)

(c)

(d)

Fig. 3

(a)                                        (b)

Fig. 4

Generating Image Data — S1

Generating Adaptive Surround View Based On Image Data And Vehicle Status Information — S3

Retrieving Vehicle Status Information — S2

Outputting Adaptive Surround View — S4

Fig. 5

**EP 3 701 711 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017061230 A1
- US 2014347450 A1
- JP 2012253428 A
- JP 2011004201 A
- JP 2011030078 A
- EP 2500216 A1
- WO 2017026083 A1
- CN 102474597 A
- US 2016301863 A1